# EUROPEAN PATENT SPECIFICATION

(11) **EP 2 942 522 B1**
(45) Date of publication and mention of the grant of the patent: **02.05.2018**
(21) Application number: 15160939.3
(22) Date of filing: 26.03.2015
(51) Int. Cl.: F03D 80/00

(54) **WIND TURBINE POWER GENERATING APPARATUS AND NACELLE ASSEMBLY METHOD FOR THE SAME**
WINDTURBINENENERGIEERZEUGUNGSVORRICHTUNG UND GONDELMONTAGEVERFAHREN DAFÜR
APPAREIL DE GÉNÉRATION DE PUISSANCE DE TURBINE ÉOLIENNE ET PROCÉDÉ D'ASSEMBLAGE NACELLE POUR CELUI-CI

(30) Priority: 07.05.2014 JP 2014096141
(43) Date of publication of application: 11.11.2015
(73) Proprietor: MITSUBISHI HEAVY INDUSTRIES, LTD., Tokyo 108-8215 (JP)
(72) Inventor: YAGI, Kenji, TOKYO, 108-8215 (JP); KAMIBAYASHI, Masakazu, TOKYO, 108-8215 (JP); SEKI, Seita, TOKYO, 108-8215 (JP); FUJIOKA, Yoshihiro, YOKOHAMA-SHI, KANAGAWA, 231-8715 (JP)
(74) Representative: Intès, Didier Gérard André

(56) References cited:
- EP-A1- 2 636 898
- WO-A2-2007/132408
- DE-A1-102008 027 498

## Description

### TECHNICAL FIELD

The present disclosure relates to a wind turbine power generating apparatus configured to generate power by utilizing wind power, and a method of assembling a nacelle for a wind turbine power generating apparatus.

### BACKGROUND

Wind turbine power generating apparatuses using wind power have become widely used in recent years, in view of preservation of the global environment. A wind turbine power generating apparatus generally includes a rotor including a hub to which a plurality of blades is mounted. Normally, a rotor is rotatably supported on a nacelle mounted on an upper end of a tower. The rotor rotates upon the blades receiving wind, and then a generator generates electric power using rotation energy of the rotor.

A wind turbine generator has been increasing in size in view of improvement of the power generation efficiency, which leads to an increase in the size of the nacelle. Thus, for the purpose of enhancing the manufacturability and transportability, a known nacelle has a divided-panel structure formed by a plurality of panels. In another case, at least a part of a nacelle is formed by an openable panel for carrying out maintenance on equipment disposed inside the nacelle. For instance, Patent Documents 1 and 2 describe a configuration of a wind turbine power generating apparatus which includes a nacelle formed by a plurality of panels.

Meanwhile, a nacelle includes various devices such as a yaw motor for yaw rotating the nacelle, a drive train such as a gearbox and a hydraulic transmission, and a main bearing for supporting a main shaft, all of which are disposed inside the nacelle. Thus, various types of oil are used in the nacelle, including lubricant oil and grease used for the gears or bearings, working oil in a case where a hydraulic transmission is employed as a drive train, working oil used in a hydraulic actuator, or cooling oil that serves as a coolant for the devices. In the event of oil leakage from the above oil-using units, the leaked oil may seep out to the outside of the wind turbine power generating apparatus.

In view of this, Patent Document 3 discloses a configuration of a wind turbine power generating apparatus including a lubricant-oil collecting unit connectable to a nacelle, for the purpose of preventing lubricant oil from leaking to the outside through a gap between the opening of the nacelle and a tower. The lubricant-oil collecting unit has grooves forced against the tower via flexible lateral portions.

### Citation List

### Patent Literature

Patent Document 1: WO2012/060370A
Patent Document 2: EP2428676A
Patent Document 3: WO2011/064002A
EP2636898 discloses a structure for nacelle cover connection unit of wind power generation device while WO2007/132408 discloses a nacelle.

### SUMMARY

As described above, high sealability is required for a nacelle to prevent leaked oil from leaking to the outside from oil-using units disposed inside the nacelle, and also to prevent rain or the like from entering the nacelle, because a wind turbine power generating apparatus is installed in an whether-exposed environment.

However, when a nacelle has a panel structure, effort and time may be required to apply a seal to each gap between panels during assembly of the panels. Thus, there is a need for a wind turbine power generating apparatus with high sealability and enhanced ease of assembly. In this regard, a conventional divided-panel structure of a nacelle is not specifically configured to improve the sealability and ease of assembly of a nacelle, as described in Patent Documents 1 and 2.

An object of some embodiments of the present invention is to provide a wind turbine power generating apparatus including a nacelle with high sealability and enhanced ease of assembly, and a method of assembling a nacelle of a wind turbine power generating apparatus.

A wind turbine power generating apparatus according to some embodiments of the present invention includes a nacelle including a plurality of unit panels and a fastening bolt for connecting the plurality of unit panels with one another. Each of the plurality of unit panels includes: a panel portion which forms at least a part of an outer surface of the nacelle; a flange portion disposed over an entire periphery of an outer peripheral edge of the panel portion, the flange portion including a bolt hole through which the fastening bolt for connecting to each of the plurality of unit panels to adjacent one of the plurality of unit panels is to be inserted; and a sealing portion disposed on an outer peripheral surface of the flange portion over an entire periphery.

According to the above wind turbine power generating apparatus, since the nacelle includes a plurality of unit panels fastened to each other by the fastening bolts, it is possible to provide a nacelle having a divided-panel structure advantageous in terms of transportability, manufacturability and maintainability. Further, the sealing portion is disposed on the outer peripheral surface of the panel portion of each unit panel over the entire periphery. In this way, the pressure applied by fastening the flange portions of adjacent two of the unit panels with each other by bolts compresses the sealing portions, so that the sealing portions extend between the flange portions without a gap. Thus, it is possible to achieve high sealability for the nacelle. Further, attaching the sealing portions in advance to the unit panels makes it possible to ensure sealability by only fastening the flange portions with bolts when assembling the nacelle, which makes it possible to improve the ease of assembly for the nacelle.

In some embodiments, the bolt hole is formed on such a region of the flange portion that the fastening bolt inserted into the bolt hole does not penetrate through the sealing portion, and the sealing portion is disposed between the panel portion and the bolt hole in a height direction of the flange portions.

Further, since the sealing portions are disposed between the panel portion and the bolt holes in the height direction of the flange portions, it is possible to prevent fluid from leaking into the interior space from the exterior space of the nacelle, or to the exterior space from the interior space of the nacelle, through the gaps between the bolt holes and the fastening bolts, or gaps between the flange portions.

In some embodiments, the sealing portions of adjacent two of the plurality of unit panels are disposed at different positions from each other in the height direction of the flange portions.

In this way, the sealing portions are doubly disposed in the height direction of the flange portions, which makes it possible to further improve the sealability of the nacelle.

In some embodiments, each panel portion includes a fiber reinforced composite material or a metal material.

In this way, it is possible to reduce the weight of the unit panels.

In some embodiments, each flange portion includes a groove for determining a position of the corresponding sealing portion.

In this way, it is possible to easily determine the positions of the sealing portions in accordance with the grooves. Further, it is possible to prevent misalignment of the sealing portions, and to position the sealing portions appropriately.

In some embodiments, each sealing portion includes elastomer.

In this way, it is possible to easily place the sealing portions, which have been deformed in accordance with the outer peripheral surface of the flange portion, on the flange portion, and to ensure high sealability thanks to the elasticity of the elastomer.

In some embodiments, each of the plurality of unit panels includes at least one corner of a curved shape, and the nacelle further includes a filling piece for filling a gap formed around the at least one corner.

In this way, even when the unit panels include a corner of a curved shape, it is possible to securely prevent leakage of fluid from the corner of a curved shape.

In some embodiments, the gap is surrounded by three or more of the unit panels arranged adjacent to one another, has a boundary defined by the corners of at least two of the three or more unit panels, and is filled with the filling piece.

In this way, it is possible to securely prevent leakage of fluid from the corner of a curved shape formed by the three or more unit panels.

In some embodiments, the filling piece includes a body which forms a central part of the filling piece, and a protruding portion which is joined to the body so as to form a corner of the filling piece, the body includes a material harder than the sealing portion, and the protruding portion includes elastomer.

As described above, with the body of the filling piece formed from a material harder than the sealing portion, high pressing force is applied to the sealing portion from the body at a part where the filling piece contacts the sealing portion, which makes it possible to maintain the high sealability achieved by the sealing portion. Further, when the unit panels include the curved corners, the gap formed around the corners gradually increases in size from the abutted surfaces of the flange portions toward the corners. Thus, with the protruding portion of the filling piece formed of elastomer, the protruding portion becomes sandwiched between the two flange portions at the end of the abutted surfaces of the flange portions, which makes it possible to securely prevent fluid from leaking through the gap formed around the corners.

In some embodiments, the protruding portion includes a rod-shaped sealing member which extends in the height direction of the flange portions.

In this way, it is possible to arrange the rod-shaped sealing member so as to extend in the height direction of the flange portion as the protruding portion, which makes it possible to improve the sealability in the gap formed around the corners.

In some embodiments, the entire filling piece is formed of elastomer.

In this way, it is possible to manufacture the stuffing piece at low cost and easily.

In some embodiments, clearance around the filling piece in the gap is filled with liquid gasket.

In this way, it is possible to further seal the clearance around the filling piece in the gap, which makes it possible to further enhance the sealability.

In some embodiments, the plurality of unit panels includes a first unit panel, a second unit panel, and a third unit panel which is connected to each of the first unit panel and the second unit panel. In the height direction of the flange portions, a first height at which a part of the sealing portion of the first unit panel contacts the third unit panel is different from a second height at which a part of the sealing portion of the second unit panel contacts the third unit panel. Also, the sealing portion of the third unit panel is disposed at the second height in a region where the sealing portion of the third panel contacts the first unit panel, and is disposed at the first height in a region where the sealing portion of the third panel contacts the second unit panel, the sealing portion of the third unit panel having a height that varies between the first height and the second height.

As described above, the sealing portions are disposed at two different heights, the first height and the second height, in the height direction of the flange portion, which makes it possible to provide a dual seal between two of the unit panels and to further improve sealability. Further, the height of the sealing portion of the third unit panel, which is connected to each of the first unit panel and the second unit panel, is disposed at the second height in a region where the sealing portion of the third panel contacts the first unit panel, and is disposed at the first height in a region where the sealing portion of the third panel contacts the second unit panel, the sealing portion of the third unit panel having a height that varies between the first height and the second height. In this way, for the three unit panels, it is sufficient if the height positions of the sealing portions include two heights, which are the first height and the second height. In this way, it is possible to narrow a range in the height direction for placing the sealing portions, as compared to a case where three heights are employed to differentiate the height positions between each unit panel.

In some embodiments, the plurality of unit panels includes four of the plurality of unit panels which are connected so that the corners of the four unit panels are abutted to one another. In the height direction of the flange portions, the sealing portions of diagonal two of the four unit panels are at an identical height, and the sealing portions of adjacent two of the four unit panels are at different heights.

As described above, in the height direction of the flange portions, the sealing portions of two diagonal unit panels have the same height, and the sealing portions of two adjacent unit panels have different heights. In this way, it is possible to provide a dual seal between two of the unit panels and to further improve the sealability. Also, it is sufficient if the four unit panels have two height positions for the sealing portions, which makes it possible to reduce the range in the height direction for placing the sealing portions.

A method of assembling a wind turbine power generating apparatus according to some embodiments of the present invention is for assembling a nacelle by connecting a plurality of unit panels. Each of the plurality of unit panels includes: a panel portion which forms at least a part of an outer surface of the nacelle; a flange portion which is disposed over an entire periphery of an outer peripheral edge of the panel portion and which includes a bolt hole; and a sealing portion disposed over an entire periphery on an outer peripheral surface of the flange portion. The method includes the steps of: abutting the flange portions of at least two of the plurality of unit panels so that the sealing portions of the at least two unit panels do not overlap with one another; and connecting the at least two unit panels with one another by inserting a fastening bolt into the bolt holes while the flange portions of the at least two unit panels are being abutted.

According to the above method of assembling a wind turbine power generating apparatus, since the nacelle includes a plurality of unit panels fastened to each other by the fastening bolts, it is possible to provide a nacelle having a divided-panel structure advantageous in terms of transportability, manufacturability and maintainability. Further, the sealing portion is disposed on the outer peripheral surface of the panel portion of each unit panel over the entire periphery. In this way, the sealing portions are compressed between the flange portions by abutting the flange portions with each other and fastening the flange portions by bolts, so that the sealing portions extend between the flange portions without a gap. Further, the flange portions are abutted to each other so that the sealing portions of two adjacent unit panels do not overlap, which makes it possible to arrange the sealing portions doubly in the height direction of the flange portions. Further, attaching the sealing portions in advance to the unit panels makes it possible to ensure sealability by only fastening the flange portions with bolts when assembling the nacelle, which makes it possible to improve the ease of assembly for the nacelle.

According to some embodiments of the present invention, since the nacelle includes a plurality of unit panels fastened to each other by the fastening bolts, it is possible to provide a nacelle having a divided-panel structure advantageous in terms of transportability, manufacturability and maintainability. Further, the sealing portion is disposed on the outer peripheral surface of the panel portion of each unit panel over the entire periphery. In this way, the pressure applied by fastening the flange portions of adjacent two of the unit panels with each other by bolts compresses the sealing portions, so that the sealing portions extend between the flange portions without a gap. Thus, it is possible to achieve high sealability for the nacelle. Further, attaching the sealing portions in advance to the unit panels makes it possible to ensure sealability by only fastening the flange portions with bolts when assembling the nacelle, which makes it possible to improve the ease of assembly for the nacelle.

### BRIEF DESCRIPTION OF DRAWINGS

FIG. 1 is a schematic configuration diagram of a wind turbine power generating apparatus according to some embodiments.
FIG. 2 is a perspective view of a nacelle according to some embodiments, as seen from the bottom section.
FIG. 3 is a perspective view of the interior of the bottom section of the nacelle according to some embodiments.
FIG. 4A is a perspective view of an exemplary configuration of the first unit panel.
FIG. 4B is a perspective view of an exemplary configuration of the second unit panel.
FIG. 5A is a cross-sectional view of an exemplary configuration of a connection part between the unit panels.
FIG. 5B is a cross-sectional view of an exemplary configuration of a connection part between other unit panels.
FIG. 6A is a perspective view of an exemplary configuration of a connection part between three unit panels.
FIG. 6B is a view of an exemplary configuration of the third unit panel from FIG. 6A, as seen in the direction of the arrows X.
FIG. 6C is a view of another exemplary configuration of the third unit panel from FIG. 6A, as seen in the direction of the arrows X.
FIG. 7A is a planar view of an exemplary configuration of a connection part between four unit panels.
FIG. 7B is a view of FIG. 7A, as seen from the direction of the arrows Y (Z).
FIG. 8 is a perspective view of an exemplary configuration of grooves on the unit panels.
FIG. 9 is a perspective view of a gap and a filling piece around corners of the unit panels according to one embodiment.
FIG. 10 is a planar view of a gap and a filling piece around corners of the unit panels according to one embodiment.
FIG. 11 is a perspective view of an exemplary configuration of a filling piece.
FIG. 12 is a perspective view of another exemplary configuration of a filling piece.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

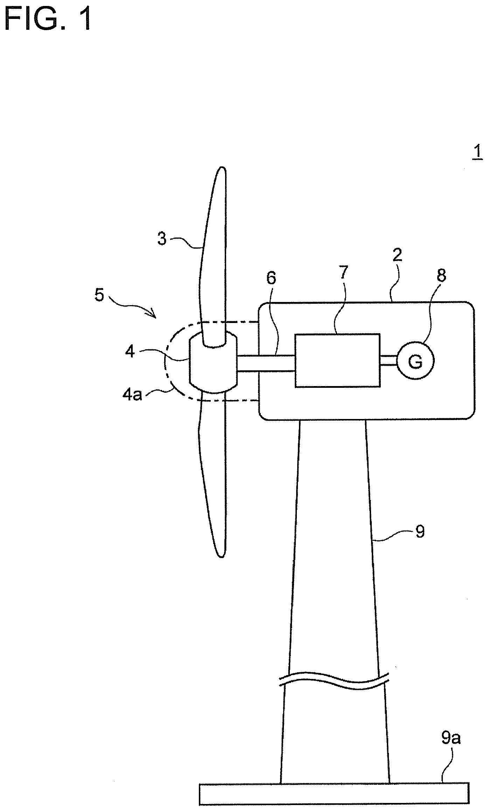

FIG. 1 is a schematic configuration diagram of a wind turbine power generating apparatus 1 according to some embodiments.

As illustrated in FIG. 1, the wind turbine power generating apparatus 1 according to some embodiments includes a nacelle 2 mounted to an upper end of a tower 9. The tower 9 is disposed on a base 9a installed on the ocean or on the ground. In one embodiment, the wind turbine power generating apparatus 1 includes at least one blade 3, a hub 4 to which the blade 3 is mounted, and a hub cover 4a disposed so as to cover the hub 4. In this wind turbine power generating apparatus 1, the blade 3 and the hub 4 make up a rotor 5. The blade 3 is mounted to the hub 4 via a pitch bearing so as to be rotatable in the pitch direction. The rotor 5 is supported rotatably on the nacelle 2.

Further, in one embodiment, the wind turbine power generating apparatus 1 includes a main shaft 6 coupled to the hub 4, a generator 8 to which rotation of the rotor 5 is inputted via the main shaft 6 and which is configured to generate power by using the rotation energy, and a drive train 7 for transmitting the rotation of the main shaft 6 to the generator 8. As the drive train 7, a hydraulic transmission, a gearbox, or a direct drive may be used. A hydraulic transmission includes a hydraulic pump and a hydraulic motor that are connected to each other via a high pressure oil line and a low pressure oil line. Inside the nacelle 2, various devices including oil-using units are disposed. In one embodiment, the main shaft 6, the drive train 7, and the generator 8 are disposed in the interior space of the nacelle 2. In another embodiment, the generator 8 or at least one device included in the drive train 7 may be disposed outside the nacelle 2, such as in the interior space of the tower 9.

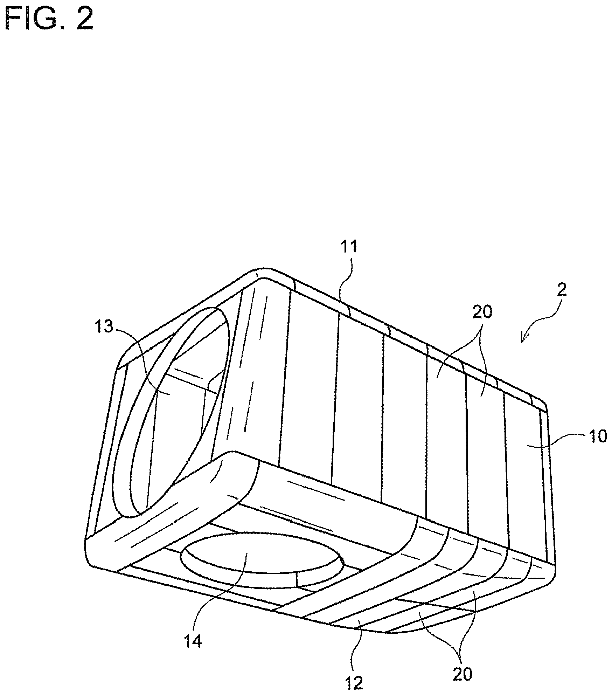

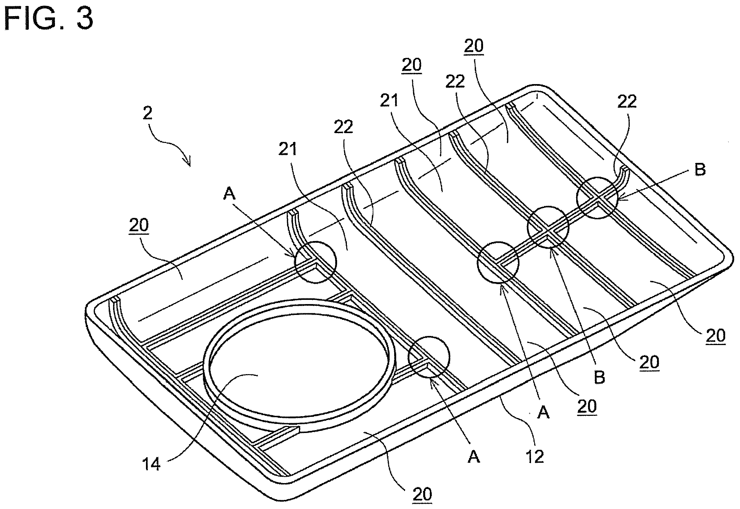

Next, with reference to FIGs. 2 and 3, the specific configuration of the nacelle 2 will be described. FIG. 2 is a perspective view of the nacelle 2 in some embodiments, as seen from the bottom section 12. FIG. 3 is a perspective view of the interior of the bottom section 12 of the nacelle 2 in some embodiments.

The nacelle 2 described below has a divided-panel structure in view of manufacturability, transportability and maintainability. Also, at least a part of the nacelle 2 has a sealing structure for the purpose of preventing leaked oil from leaking out from the oil-using units disposed in the interior space of the nacelle 2, or for the purpose of preventing rain or the like from entering the interior space of the nacelle 2, for instance. Here, the nacelle 2 may include a nacelle base plate mounted to the upper part of the tower 9 via a rotational ring bearing (not illustrated), a frame supported on the nacelle base plate, and a nacelle cover supported on the nacelle base plate via the frame. In this case, in the following description, the nacelle 2 mainly refers to the nacelle cover.

In some embodiments, the nacelle 2 includes a lateral section 10, an upper section 11 and the bottom section 12. The lateral section 10 at the front of the nacelle 2 may include an opening 13 through which the main shaft 6 (see FIG. 1) is inserted, and the bottom section 12 may include an opening 14 through which the tower 9 is inserted.

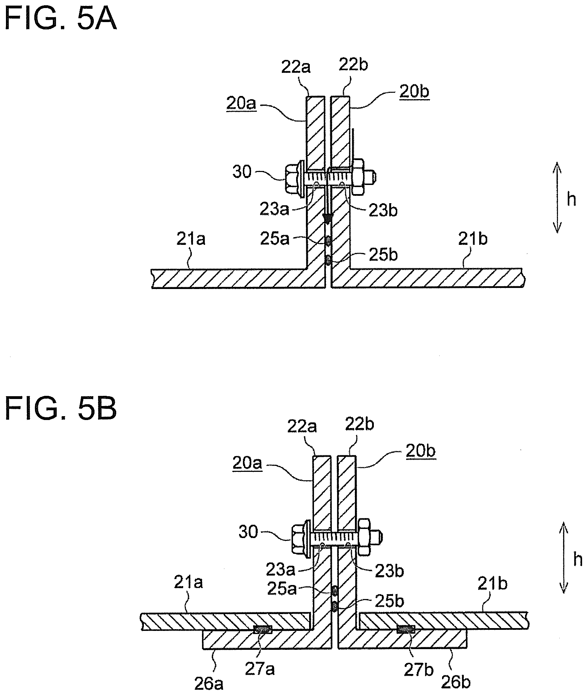

Further, the nacelle 2 includes a plurality of unit panels 20 and fastening bolts 30 (see FIGs. 5A and 5B) for connecting the plurality of unit panels 20 with one another. As illustrated in FIG. 2, all of the lateral section 10, the upper section 11, and the bottom section 12 may be formed by a plurality of the unit panels 20. Alternatively, although not illustrated, a part of the nacelle 2 may be formed by a plurality of the unit panels 20, such as a maintenance opening.

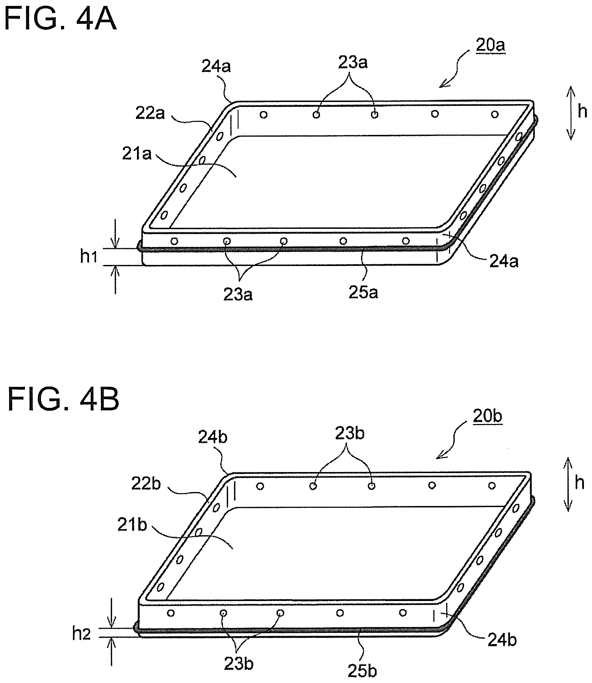

FIGs. 4A and 4B illustrate an exemplary configuration of a unit panel 20. FIGs. 5A and 5B illustrate an exemplary configuration of a connection part of unit panels. Specifically, FIG. 4A is a perspective view of an exemplary configuration of the first unit panel 20a, and FIG. 4B is a perspective view of an exemplary configuration of the second unit panel 20b. FIG. 5A is a cross-sectional view of an exemplary configuration of a connection part of the unit panels, and FIG. 5B is a cross-sectional view of an exemplary configuration of a connection part of other unit panels.

As illustrated in FIGs. 4A to 5B, in one embodiment, the first unit panel 20a and the second unit panel 20b are arranged adjacent to each other on the same plane on the outer surface of the nacelle 2. Each unit panel 20a, 20b includes a panel portion 21a, 21b, a flange portion 22a, 22b, and a sealing portion 25a, 25b. The panel portion 21a, 21b is a plate-shape member that forms at least a part of the outer surface of the nacelle 2.

Specifically, the panel portion 21a, 21b may be formed in a planar shape, or at least a part of the panel portion 21a, 21b may have a curved surface. Further, the panel portion 21a, 21b may be a quadrilateral such as a square or a rectangular, or may have at least a part including a curved or bended edge, as in the panel portion 21a, 21b disposed at the position of the openings 13, 14 (see FIG. 2). Further, for the purpose of reducing the weight, the panel portion 21a, 21b may include a fiber reinforced composite material such as the glass fiber reinforced composite material or the carbon fiber reinforced composite material, or may include a lightweight metal material such as aluminum.

The flange portion 22a, 22b is disposed on the entire periphery of the outer peripheral edge of the panel portion 21a, 21b. The flange portion 22a, 22b includes bolt holes 23a, 23b through which fastening bolts 30 are to be inserted. The flange portion 22a, 22b may be disposed in a direction orthogonal to the panel portion 21. Further, as illustrated in the drawings, the flange portion 22a, 22b may protrude only to one side in the height direction "h" from the outer peripheral edge of the panel portion 21a, 21b, or may protrude, although not illustrated, to both sides in the height direction h from the outer peripheral edge of the panel portion 21(T-shaped cross section). Described below is an example where the flange portion 22 protrudes to only one side toward the interior space of the nacelle 2 from the outer peripheral edge of the panel portion 21a, 21b.

In one exemplary configuration, as illustrated in FIGs. 4A, 4B, and 5A, the panel portion 21a, 21b and the flange portion 22a, 22b may be formed as one piece. Specifically, as to the first unit panel 20a, the panel portion 21a and the flange portion 22a are integrated, and as to the second unit panel 20b, the panel portion 21b and the flange portion 22b are integrated. In this case, the panel portion 21a, 21b and the flange portion 22a, 22b are integrally formed from a metal material such as aluminum alloy and steel, or a fiber reinforced composite material such as carbon fiber reinforced composite material and glass fiber reinforced composite material. Alternatively, the panel portion 21a, 21b and the flange portion 22a, 22b may be formed as separate pieces connected to each other. For instance, the panel portion 21a, 21b is formed from a fiber reinforced composite material and the flange portion 22a, 22b is formed from a metal material, the panel portion 21a, 21b and the flange portion 22a, 22b being connected to each other by a connecting technique such as bolt fastening or adhesive bonding.

In another configuration, as illustrated in FIG. 5B, the unit panels 20a, 20b may each include a support portion 26a, 26b which is integrally formed with the flange portion 22a, 22b and which has a face perpendicular to the flange portion 22a, 22b (i.e. parallel to the panel portion 21a, 21b). The flange portion 22a, 22b and the support portion 26a, 26b may include angle steel, which is a steel material formed to have an L-shaped cross section. The panel portion 21a, 21b is disposed in a space surrounded by the flange portion 22a, 22b and the support portion 26a, 26b, so that the panel portion 21a, 21b is supported by the support portion 26a, 26b. In this case, a second sealing portion 27a, 27b may be disposed between the lower surface of the panel portion 21a, 21b and the upper surface of the support portion 26a, 26b, in order to maintain good sealability. The second sealing portion 27a, 27b may be arranged along the outer periphery of the panel portion 21a, 21b in an annular fashion. The second sealing portion 27a, 27b may be disposed on a groove provided for at least one of the lower surface of the panel portion 21a, 21b or the upper surface of the support portion 26a, 26b.

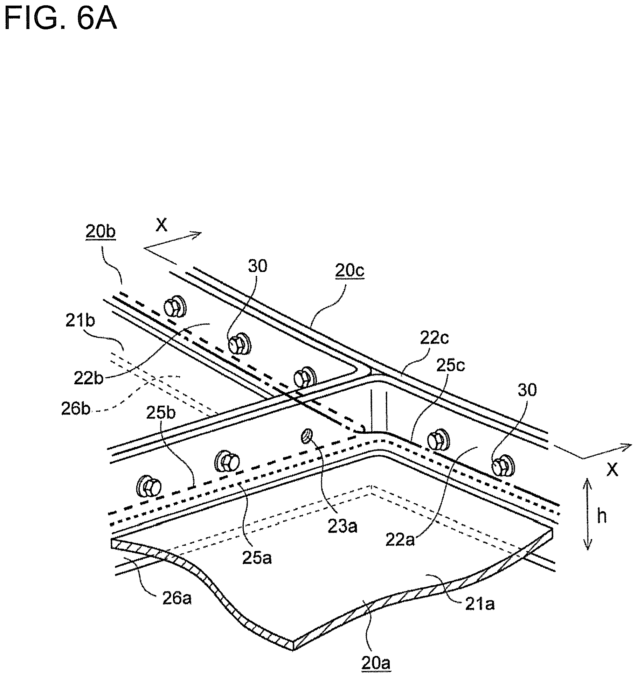

As illustrated in FIGs. 4A to 5B, the sealing portion 25a, 25b is disposed over the entire periphery on the outer peripheral surface of the flange portion 22a, 22b. The sealing portion 25a, 25b may be formed of elastomer, in case of which the sealing portion 25a, 25b may be formed by an O ring and mounted to the flange portion 22a, 22b attachably and detachably, or the sealing portion 25a, 25b may be adhesively bonded to the flange portion 22a, 22b (including cure adhesion). In this way, it is possible to easily place the sealing portion 25a, 25b, which have been deformed in accordance with the outer peripheral surface of the flange portion 22a, 22b, onto the flange portion 22a, 22b, and to ensure high sealability thanks to the elasticity of the elastomer. For instance, the sealing portion 25a, 25b includes an O ring formed of elastomer. Further, the position of the sealing portion 25a, 25b, in the height direction h of the flange portion 22a, 22b, may be different between adjacent two of the unit panels 20a, 20b. Here, the position in the height direction of the flange portion 22a, 22b refers to the position in a direction perpendicular to the panel portions 21a, 21b. With reference to FIG. 4A, the sealing portion 25a is disposed on the flange portion 22a of the first unit panel 20a, at the height h₁ from the panel portion 21a. On the other hand, the sealing portion 25b is disposed on the flange portion 22b at the height h₂ from the panel portion 21b. The heights h₁ and h₂ are varied from each other, and the height h₁ is higher than the height h₂, for instance. Here, while FIGs. 4A and 4B illustrate the unit panels 20a, 20b where the heights h₁, h₂ of the respective sealing portions 25a, 25b are constant in the peripheral direction of the panel portions 21a, 21b. However, the height of the sealing portions 25 may be varied in the peripheral direction of the panel portion 21 in one of the unit panels 20, as described below (as in the third unit panel 20c in FIG. 6A, for instance).

As illustrated in FIGs. 5A and 5B, in the first unit panel 20a and the second unit panel 20b, arranged adjacent to each other, the outer peripheral surfaces of the flange portions 22a, 22b are abutted to each other across the sealing portions 25a, 25b, and then connected to each other by the fastening bolts 30. At this time, fastening force from the fastening bolts 30 applies pressing force to the sealing portions 25a, 25b, so that the sealing portions 25a, 25b are compressed between the two flange portions 22a, 22b to extend between the flange portions 22a, 22b without a gap in between. Thus, it is possible to achieve high sealability for the nacelle 2. Further, attaching the sealing portions 25a, 25b in advance to the unit panels 20a, 20b makes it possible to ensure sealability by only fastening the flange portions 22a, 22b with bolts when assembling the nacelle 2, which makes it possible to improve the ease of assembly for the nacelle 2. For instance, the sealing portions 25a, 25b may be attached to the unit panels 20 in advance when manufacturing the unit panels 20, and then the unit panels 20 may be assembled at the construction site of the wind turbine power generating apparatus.

Among the plurality of unit panels 20, the sealing portions 25a, 25b of the adjacent unit panels 20a, 20b may be disposed at different positions from each other in the height direction h of the flange portions 22a, 22b. For instance, as illustrated in FIGs. 4A and 4B, the sealing portions 25a, 25b of the adjacent unit panels 20a, 20b have the different heights h₁, h₂, respectively. In this way, the sealing portions 25a, 25b are doubly disposed in the height direction h of the flange portions 22a, 22b, which makes it possible to further improve the sealability of the nacelle 2.

In one embodiment, the first unit panel 20a and the second unit panel 20b, which are disposed adjacent to each other, may be configured to form an identical plane (for instance, the lateral section 10, the upper section 11, or the bottom section 12 in FIG. 3) of the outer surface of the nacelle 2. That is, the respective flange portions 22a, 22b of the first unit panel 20a and the second unit panel 20b are abutted to each other while the panel portions 21a, 21b are arranged to form an identical plane, and then fastened by bolts across the sealing portions 25a, 25b. Specifically, at least a part of the bottom section 12 of the nacelle 2 may include the plurality of unit panels 20 connected to one another as described above, for the purpose of preventing oil from leaking out to the outside of the wind turbine power generating apparatus 1 from the oil-using units disposed in the interior space of the nacelle 2. In this way, the bottom section of the nacelle 2 can also serve as an oil pan. Further, at least a part of the lateral section 10 or the upper section 11 of the nacelle 2 may include the plurality of unit panels 20 connected to one another as described above, for the purpose of preventing rain or the like from entering the wind turbine power generating apparatus 1 from the outside.

Further, in one embodiment, the bolt holes 23a, 23b are formed in a region of the flange portion 22a, 22b where bolts inserted into the bolt holes 23a, 23b would not penetrate through the sealing portion 25a, 25b. Further, in the height direction h of the flange portion 22a, 22b, the sealing portion 25a, 25b is disposed between the panel portion 21a, 21b and the bolt holes 23a, 23b. In this way, with the bolt holes 23a, 23b formed in a region of the flange portion 22a, 22b where bolts would not penetrate through the sealing portion 25a, 25b, it is possible to prevent a decrease in the strength of the sealing portion 25a, 25b. Further, since the sealing portion 25a, 25b is disposed between the panel portion 21 and the bolt holes 23a, 23b in the height direction h of the flange portion 22, it is possible to prevent fluid from leaking into the interior space from the exterior space of the nacelle 2, or to the exterior space from the interior space of the nacelle 2, through the gaps between the bolt holes 23a, 23b and the fastening bolts 30, and gaps between the flange portions 22a 22b. Specifically, when the sealing portions 25a, 25b are disposed on a side farther from the panel portion 21 than the bolt holes 23a, 23b in the height direction h of the flange portion 22, the fluid in the interior space of the nacelle 2 may leak through the gap between the bolt holes 23a, 23b and the fastening bolts 30 into the gap between the flange portions 22a, 22b, and then to the exterior space of the nacelle 2 through the gap between the flange portions 22a, 22b, as indicated by the arrow in FIG. 5A, for instance. In view of this, the sealing portions 25a, 25b are disposed between the panel portions 21a, 21b and the bolt holes 23a, 23b in the height direction h of the flange portions 22 as described above, which makes it possible to prevent communication between the interior space and the exterior space of the nacelle 2 through the gap between the bolt holes 25a, 25b and the fastening bolts 30, and through the gap between the flange portions 22a, 22b, thereby preventing leakage of fluid.

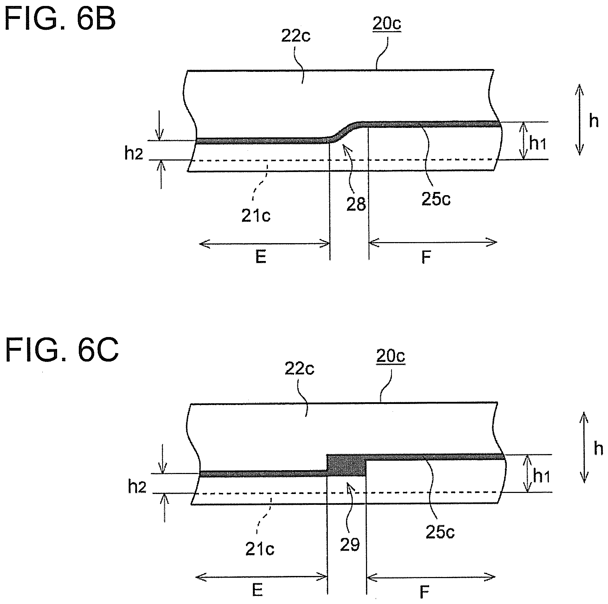

FIG. 6A is a perspective view of an exemplary configuration of a connection part of three unit panels. FIG. 6B is a view of an exemplary configuration of the third unit panel in FIG. 6B, as seen in the direction of the arrows X. FIG. 6C is a view of another exemplary configuration of the third unit panel in FIG. 6B, as seen in the direction of the arrows X.

FIG. 6A illustrates an exemplary configuration of a connection part of three unit panels 20a, 20b, 20c. The connection part is indicated as a part A of the nacelle 2 in FIG. 3. Specifically, the first unit panel 20a, the second unit panel 20b, and the third unit panel 20c are connected to one another. The first unit panel 20a is connected to the second unit panel 20b at the first outer peripheral surface (for instance, a plane surface on the outer peripheral side) of the first unit panel 20a, and connected to the third unit panel 20c at the second peripheral surface that is perpendicular to the first peripheral surface and adjacent to the first peripheral surface. Specifically, the second unit panel 20b and the third unit panel 20c are connected to the different outer peripheral surfaces of the first unit panel 20a, respectively. Similarly, the second unit panel 20b is connected to the first unit panel 20a at the first outer peripheral surface (for instance, a plane surface on the outer peripheral side) of the second unit panel 20b, and connected to the third unit panel 20c at the second peripheral surface that is perpendicular to the first peripheral surface and adjacent to the first peripheral surface. Specifically, the first unit panel 20a and the third unit panel 20c are connected to the different outer peripheral surfaces of the second unit panel 20b, respectively. On the other hand, the third unit panel 20c is connected to the first unit panel 20a and the second unit panel 20b at the same outer peripheral surface (for instance, a plane surface on the outer peripheral side). Specifically, the first unit panel 20a and the second unit panel 20b, which are adjacent to each other, are connected to the third unit panel 20c at the same plane.

At the connection part having the above configuration, the first height h₁ (see FIG. 4B) at which a part of the sealing portion 25a of the first unit panel 20a contacts the third unit panel 20c is different from the second height h₂ (see FIG. 4A) at which a part of the sealing portion 25b of the second unit panel 20b contacts the third unit panel 20c, in the height direction h of the flange portions 22. As illustrated in FIGs. 6B and 6C, the sealing portion 25c of the third unit panel 20c is at the second height h₂ in a contact region E where the sealing portion 25c contacts the first unit panel 20a, and is at the first height h₁ in a contact region F where the sealing portion 25c contacts the second unit panel 20b. As described above, the sealing portions 25a to 25c are disposed at two different heights, the first height h₁ and the second height h₂, in the height direction h of the flange portions 22, which makes it possible to provide a dual seal between two of the unit panels 20a to 20c abutted to each other, and to further improve sealability.

Further, at intersections 28, 29 of the first height h₁ and the second height h₂, the height of the sealing portion of the third unit panel 20 is varied. In this way, for the three unit panels 20a to 20c, it is sufficient if the height positions of the sealing portions 25a to 25c include two heights, which are the first height h₁ and the second height h₂. Thus, it is possible to narrow a range in the height direction for placing the sealing portions 25a to 25c, as compared to a case where three heights are used to differentiate the height positions of the unit panels 20a to 20c from one another. In the example of FIG. 6B, the sealing portion 25c has a constant diameter in the peripheral direction of the third unit panel 20c, and is varied only in height between the first direction h₁ and the second height h₂ at the intersection 28. That is, since the height of the sealing portion 25c is varied to the first height h₁ from the second height h₂, the sealing portion 25c is curved or bended at the intersection 28. In the example of FIG. 6C, the sealing portion 25c is formed in such a shape that fills the gap between the first height h₁ and the height h₂ so as to have a greater thickness in the height direction at the intersection 29.

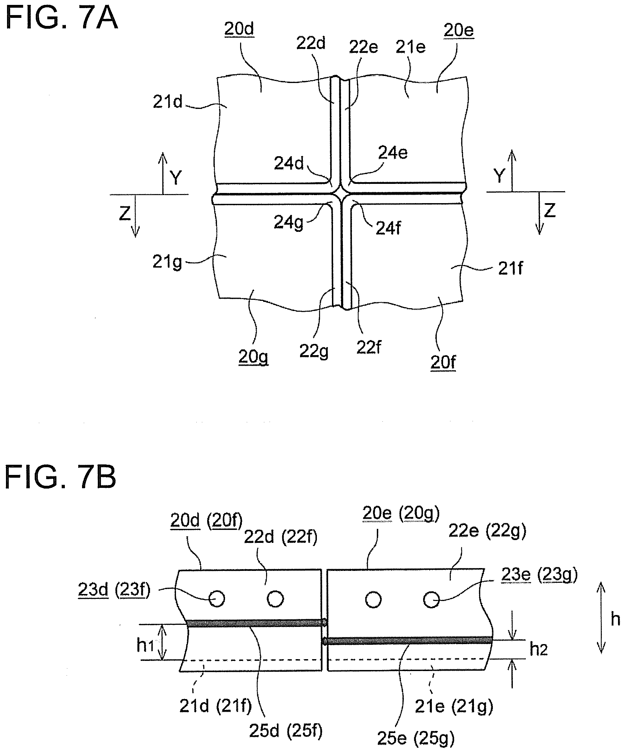

FIG. 7A is a planar view of an exemplary configuration of a connection part of four unit panels. FIG. 7B is a view in the direction of the arrows Y (Z) of FIG. 7A. Here, a view in the direction of the arrows Z is not illustrated because the configuration is the same in a view in the direction of the arrows Y and a view in the direction of the arrows Z of FIG. 7A. In FIG. 7B, reference signs in parentheses represent components as seen in the Z-Z direction.

FIG. 7A illustrates an exemplary configuration of a connection part of four unit panels 20d to 20f. The connection part is indicated as a part B of the nacelle 2 in FIG. 3. The four unit panels 20d to 20g are connected to one another, with respective corners 24d to 24g of the four unit panels 20d to 20g abutted to one another. At this time, in the height direction h of the flange portions 22, the sealing portions 25 of two diagonal unit panels 20 have the same height, and the sealing portions 25 of two adjacent unit panels 20 have different heights. In the drawing, the unit panel 20d, the unit panel 20e, the unit panel 20f, and the unit panel 20g are arranged clockwise in this order. In this case, the height h1 of the sealing portion 25d of the unit panel 20d is equal to the height h₁ of the sealing portion 25f of the unit panel 20f positioned diagonally from the unit panel 20d. Similarly, the height h₂ of the sealing portion 25e of the unit panel 20e is equal to the height h₂ of the sealing portion 25g of the unit panel 20g positioned diagonally from the unit panel 20d. On the other hand, the height h₁ of the sealing portion 25d of the unit panel 20d is different from the height h₂ of the sealing portions 25e, 25g of the unit panels 20e, 20g adjacent to the unit panel 20d. Similarly, the height h₁ of the sealing portion 25f of the unit panel 20f is different from the height h₂ of the sealing portions 25e, 25g of the unit panels 20e, 20g adjacent to the unit panel 20f.

With the above configuration, it is possible to provide a dual seal between two of the unit panels 20d to 20g and to further improve the sealability. Also, it is sufficient if the four unit panels 20d to 20g have two different height positions for the sealing portions 25d to 25g, which makes it possible to reduce the range in the height direction for placing the sealing portions 25d to 25g.

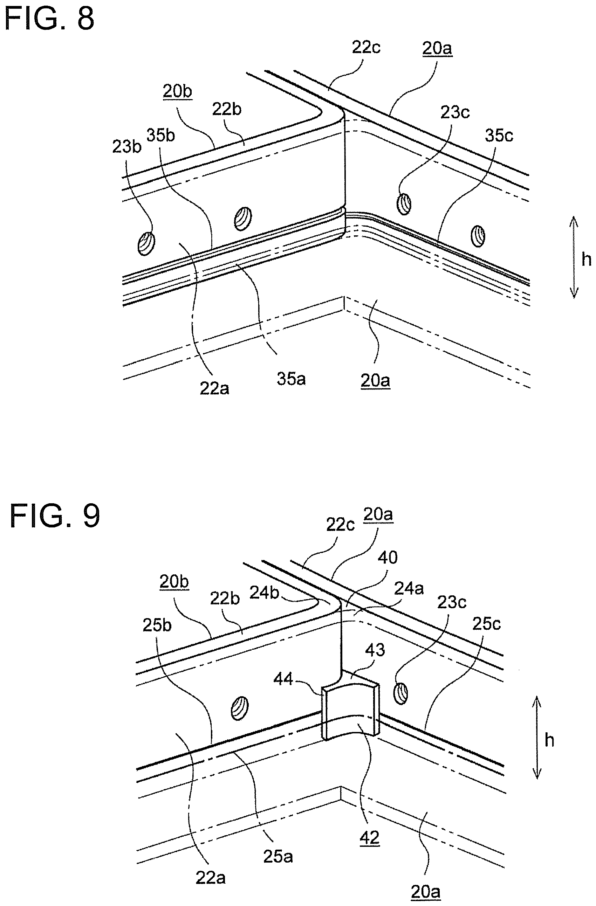

FIG. 8 is a perspective view of an exemplary configuration of grooves 35a to 35c of the unit panels 20a to 20c. With reference to the drawing, the configuration of the connection part of the three unit panels 20a to 20c described in FIG. 6A is used as an example in the description.

In one embodiment, the flange portions 22a to 22c include grooves 35a to 35c for determining the positions of the sealing portions 25a to 25c. Specifically, a groove 35a is formed on the outer peripheral surface of the flange portion 22a of the first unit panel 20a, a groove 35b is formed on the outer peripheral surface of the flange portion 22b of the second unit panel 20b, and a groove 35c is formed on the outer peripheral surface of the flange portion 22c of the third unit panel 20c. Further, the grooves 35a to 35c may be formed corresponding to the predetermined heights of the sealing portions 25a to 25c. In this way, it is possible to easily determine the positions of the sealing portions 25a to 25c in accordance with the grooves 35a to 35c. Further, it is possible to prevent misalignment of the sealing portions 25a to 25c, and to position the sealing portions 25a to 25c appropriately. There is a case, in particular, where it is difficult to determine the position at an intersection where the height position is varied, as in the third unit panel 20c. Thus, attaching the sealing portion 25c such as an O ring along the groove 35c, which has been formed in advance as described above, makes it possible to position the sealing portion 25c easily at the appropriate position.

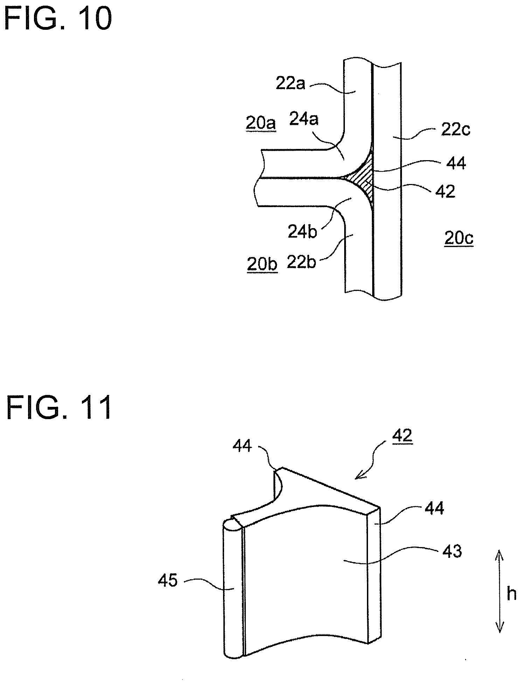

FIG. 9 is a perspective view of a gap 40 and a filling piece 42 around corners of the unit panels 20a to 20c according to one embodiment. FIG. 10 is a planar view of a gap 40 and a filling piece 42 around corners of the unit panels 20a to 20c according to one embodiment.

In some embodiments, when the plurality of unit panels 20 each have at least one curved corner 24, the nacelle 2 may further include a filling piece 42 for filling the gap 40 formed around the corners 24. In one embodiment, the filling piece 42 fills the gap 40, which is surrounded by three or more of the unit panels 20 adjacent to one another, and whose boundary is defined by the corners 24 of the at least two of the above three or more unit panels 20. For instance, as illustrated in FIGs. 9 and 10, the gap 40 is surrounded by the three unit panels 20a to 20c adjacent to one another, and formed around two corners 24a, 24b. The filling piece 42 is fit into this gap 40. As a result, even when the unit panels 20a, 20b including the curved corners 24a, 24b are used, it is possible to securely prevent fluid from leaking through the curved corners 24a, 24b.

In one embodiment, the filling piece 42 includes a body 43 that forms a center portion of the filling piece 42, and a protruding portion 44 joined to the body 43 so as to form a corner of the filling piece 42. The body 43 is formed from a material that is harder than the sealing portion 25. The protruding portion 44 is formed from elastomer. The protruding portion 44 and the body 43 may be adhesively joined to each other, or may be joined by cure adhesion when the body 43 is made from metal.

As described above, with the body 43 of the filling piece 42 formed from a material harder than the sealing portion 25, high pressing force is applied to the sealing portion 25 from the body 43 at a part where the filling piece 42 contacts the sealing portion 25, which makes it possible to maintain the high sealability achieved by the sealing portion 25. Further, when the unit panel 20 includes the curved corners 24, the gap 40 formed around the corners 24 gradually increases in size from the abutted surfaces of the flange portions 22 toward the corners 24. Thus, with the protruding portion 44 of the filling piece 42 formed from elastomer, the protruding portion 44 becomes sandwiched between the two flange portions 22 at the ends of the abutted surfaces of the flange portions 22, which makes it possible to securely prevent fluid from leaking through the gap 40 formed around the corners 24.

In another configuration, the entire filling piece may be formed of elastomer as one piece. In this way, the filling piece can be manufactured at low cost and easily.

FIG. 11 is a perspective view of one configuration of the filling piece 42.

As illustrated in the drawing, the protruding portion 44 may include a rod-shaped sealing member 45 extending in the height direction of the flange portion 22. The rod-shaped sealing member 45 may be formed of elastomer as described above. In this way, it is possible to arrange the rod-shaped sealing member 45 to extend in the height direction h of the flange portion 22 as the protruding portion 44, which makes it possible to improve the sealability in the gap 40 formed around the corners 24.

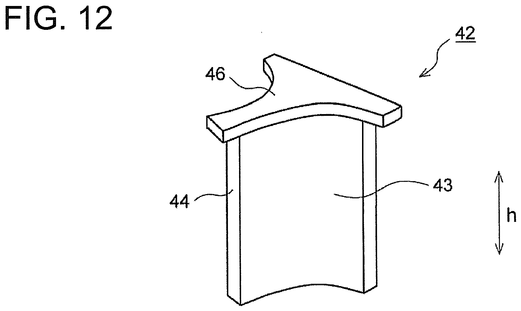

FIG. 12 is a perspective view of another exemplary configuration of the filling piece 42.

As illustrated in the drawing, the filling piece 42 includes a body 43, and a lid 46 disposed on the upper end of the body 43 in the height direction H. The lid 46 is larger in diameter than the gap 40 so that the lid 46 does not fall into the gap 40. That is, when the body 43 of the filling piece 42 is inserted into the gap 40, the lid 46 becomes hung up and stops at the end of the flange portions 22. Thus, it is possible to prevent the filling piece 42 from falling below the gap 40.

Further, the clearance around the filling piece 42 in the gap 40 may be filled with liquid gasket. In this way, it is possible to seal the gap 40 with the filling piece 42 even better, which makes it possible to further improve the sealability.

Now, in reference to FIG. 6A, a method of assembling a wind turbine power generating apparatus according to some embodiments will be described.

A method of assembling a wind turbine power generating apparatus includes the first step of abutting the flange portions 22a to 22c of at least two of the unit panels 20a to 20c so that the sealing portions 25a to 25c of the at least two unit panels 20a to 20c do not overlap with each other, and the second step of connecting the at least two unit panels 20a to 20c by inserting fastening bolts 30 into bolt holes 23a to 23c (see FIG. 8), while the flange portions 22a to 22c of the at least two unit panels 20a to 20c are abutted to one another. The sealing portions 25a to 25c of the unit panels 20a to 20c may be attached to the flange portions 22a to 22c at the manufacturing site of the unit panels 20a to 20c before shipping, or may be attached to the flange portions 22a to 22c at the construction site of the wind turbine power generating apparatus 1 or another place after shipping.

In the first step, as described above, the flange portions 22a, 22b of the at least two unit panels 20a, 20b are abutted to the same outer circumferential surface (for instance, plane surface) of the flange portion 22c of the third unit panel 20c, as described above. Here, when the height positions are different between the sealing portions 25a, 25b of the flange portions 22a, 22b, the height position of the sealing portion 25c is varied so as to avoid the height position of the above sealing portions 25a, 25b. In this way, it is sufficient if the height positions of the sealing portions 25a to 25c include two different heights in the three unit panels 20a to 20c, which makes it possible to reduce the range in the height direction for placing the sealing portions 25a to 25c as compared to a case where the height positions are all differentiated from one another in the unit panels 20a to 20c to include three heights. Further, as illustrated in FIGs. 7A and 7B, when four unit panels 20d to 20g are coupled to one another while the respective corners 24d to 24g are abutted to one another, the sealing portions 25 are arranged so that the sealing portions 25d to 25g of diagonal two of the unit panels 20d to 20g have the same height in the direction H of the flange portions 22, and the sealing portions 25d to 25g of adjacent two of the unit panels 20d to 20g have different heights. In this way, it possible to reduce the range in the height direction for placing the sealing portions 25a to 25c, similarly to the above case where the three unit panels are coupled to one another.

According to the above method of assembling a wind turbine power generating apparatus, since the nacelle 2 includes a plurality of unit panels 20 fastened to one another by the fastening bolts 30, it is possible to provide a nacelle 2 having a divided-panel structure advantageous in terms of transportability, manufacturability and maintainability. Further, the sealing portion 25 is disposed on the outer peripheral surface of the panel portion 21 of each unit panel 20 over the entire periphery. In this way, the sealing portions 25 are compressed between the flange portions 22 by abutting the flange portions 22 with each other and fastening the flange portions 22 by bolts, so that the sealing portions 25 extend between the flange portions 22 without a gap. Further, the flange portions 22 are abutted to each other so that the sealing portions 25 of two adjacent unit panels 20 do not overlap, which makes it possible to arrange the sealing portions 25 doubly in the height direction of the flange portions 22. In this way, it is possible to achieve high sealability for the nacelle 2. Further, attaching the sealing portions 24 in advance to the unit panels 20 makes it possible to ensure sealability by only fastening the flange portions 22 with bolts when assembling the nacelle 2, which makes it possible to improve the ease of assembly for the nacelle 2.

As described above, according to the above embodiments, since the nacelle 2 includes a plurality of unit panels 20 fastened to one another by the fastening bolts 30, it is possible to provide a nacelle 2 having a divided-panel structure advantageous in terms of transportability, manufacturability and maintainability. Further, the sealing portion 25 is disposed on the outer peripheral surface of the panel portion 21 of each unit panel 20 over the entire periphery. In this way, the sealing portions 25 are compressed between the flange portions 22 by abutting the flange portions 22 with each other and fastening the flange portions 22 by bolts, so that the sealing portions 25 extend between the flange portions 22 without a gap. In this way, it is possible to achieve high sealability for the nacelle 2. At this time, attaching the sealing portions 24 in advance to the unit panels 20 makes it possible to ensure sealability by only fastening the flange portions 22 with bolts when assembling the nacelle 2, which makes it possible to improve the ease of assembly for the nacelle 2.

The term "along" and "in" used in the above description of the embodiments do not only refer to a state of being parallel to a referred direction or object in a geometrically strict sense, but also includes a state of forming an angle of a certain size (for instance, an angle not more than 30 degrees) with respect to a referred direction of object.

Embodiments of the present invention were described in detail above, but the present invention is not limited thereto, and various amendments and modifications may be implemented within a scope that does not depart from the present invention.

## Claims

1. A wind turbine power generating apparatus comprising a nacelle (2) which includes a plurality of unit panels (20a, 20b) and a fastening bolt (30) for connecting the plurality of unit panels with one another, each of the plurality of unit panels including:
a panel portion (21a, 21b) which forms at least a part of an outer surface of the nacelle;
a flange portion (22a, 22b) disposed over an entire periphery of an outer peripheral edge of the panel portion (21a, 21b), the flange portion including a bolt hole (23a, 23b) through which the fastening bolt (30) for connecting each of the plurality of unit panels to adjacent one of the plurality of unit panels is to be inserted; and
a sealing portion (25a, 25b) disposed on an outer peripheral surface of the flange portion (22a, 22b) over an entire periphery.

2. The wind turbine power generating apparatus according to claim 1,
wherein, in each of the plurality of unit panels (20a, 20b), the bolt hole (23a, 23b) is formed on such a region of the flange portion (22a, 22b) that the fastening bolt (30) inserted into the bolt hole (23a, 23b) does not penetrate through the sealing portion (25a, 25b), and the sealing portion (25a, 25b) is disposed between the panel portion (21a, 21b) and the bolt hole (23a, 23b) in a height direction of the flange portions (22a, 22b).

3. The wind turbine power generating apparatus according to claim 1 or 2,
wherein the sealing portions (25a, 25b) of adjacent two of the plurality of unit panels (20a, 20b) are disposed at different positions from each other in the height direction of the flange portions (22a, 22b).

4. The wind turbine power generating apparatus according to any one of claims 1 to 3,
wherein each panel portion (21a, 21b) includes a fiber reinforced composite material or a metal material.

5. The wind turbine power generating apparatus according to any one of claims 1 to 4,
wherein each flange portion (22a, 22b) includes a groove (35a, 35b) for determining a position of the corresponding sealing portion (25a, 25b).

6. The wind turbine power generating apparatus according to any one of claims 1 to 5,
wherein each sealing portion (25a, 25b) includes elastomer.

7. The wind turbine power generating apparatus according to any one of claims 1 to 6,
wherein each of the plurality of unit panels (20a, 20b) includes at least one corner of a curved shape, and
wherein the nacelle (2) further includes a filling piece (42) for filling a gap (40) formed around the at least one corner (24).

8. The wind turbine power generating apparatus according to claim 7,
wherein the gap (40) is surrounded by three or more of the unit panels (20a, 20b, 20c) arranged adjacent to one another, has a boundary defined by the corners of at least two of the three or more unit panels, and is filled with the filling piece (42).

9. The wind turbine power generating apparatus according to claim 7 or 8,
wherein the filling piece (42) includes a body (43) which forms a central part of the filling piece (42), and a protruding portion (44) which is joined to the body (43) so as to form a corner of the filling piece (42),
wherein the body (43) includes a material harder than the sealing portion (25a, 25b), and wherein the protruding portion (44) includes elastomer.

10. The wind turbine power generating apparatus according to any one of claims 7 to 9,
wherein the filling piece (42) includes a body (43) which forms a central part of the filling piece (42), and a protruding portion (44) which is joined to the body (43) so as to form a corner of the filling piece (42),
wherein the protruding portion (44) includes a rod-shaped sealing member (45) which extends in the height direction of the flange portions (22a, 22b).

11. The wind turbine power generating apparatus according to claim 7 or 8,
wherein the entire filling piece (42) is formed of elastomer.

12. The wind turbine power generating apparatus according to any one of claims 7 to 11,
wherein clearance around the filling piece (42) in the gap (40) is filled with liquid gasket.

13. The wind turbine power generating apparatus according to any one of claims 1 to 12,
wherein the plurality of unit panels includes a first unit panel (20a), a second unit panel (20b), and a third unit panel (20c) which is connected to each of the first unit panel (20a) and the second unit panel (20b),
wherein, in the height direction of the flange portions (22a, 22b, 22c), a first height (h₁) at which a part of the sealing portion (25a) of the first unit panel (20a) contacts the third unit panel (20c) is different from a second height (h₂) at which a part of the sealing portion (25b) of the second unit panel (20b) contacts the third unit panel (20c), and
wherein the sealing portion (25c) of the third unit panel (20c) is disposed at the second height (h₂) in a region where the sealing portion (25c) of the third panel (20c) contacts the first unit panel (20a), and is disposed at the first height (h₁) in a region where the sealing portion (25c) of the third panel (20c) contacts the second unit panel (20b), the sealing portion (25c) of the third unit panel (20c) having a height that varies between the first height (h₁) and the second height (h₂).

14. The wind turbine power generating apparatus according to any one of claims 1 to 13,
wherein the plurality of unit panels includes four of the plurality of unit panels (20d, 20e, 20f, 20g) which are connected so that the corners (24d, 24e, 24f, 24g) of the four unit panels are abutted to one another, and
wherein, in the height direction of the flange portions (22d, 22e, 22f, 22g), the sealing portions (25d, 25e, 25f, 25g) of diagonal two of the four unit panels are at an identical height, and the sealing portions (25d, 25e, 25f, 25g) of adjacent two of the four unit panels are at different heights.

15. A method of assembling a wind turbine power generating apparatus, for assembling a nacelle (2) by connecting a plurality of unit panels (20a, 20b) each of which includes: a panel portion (21a, 21b) which forms at least a part of an outer surface of the nacelle; a flange portion (22a, 22b) which is disposed over an entire periphery of an outer peripheral edge of the panel portion (21a, 21b) and which includes a bolt hole (23a, 23b); and a sealing portion (25a, 25b) disposed over an entire periphery on an outer peripheral surface of the flange portion (22a, 22b), the method being **characterized in that** it comprises the steps of:
abutting the flange portions (22a, 22b) of at least two of the plurality of unit panels so that the sealing portions (25a, 25b) of the at least two unit panels do not overlap with one another; and
connecting the at least two unit panels (20a, 20b) with one another by inserting a fastening bolt (30) into the bolt holes (23a, 23b) while the flange portions (22a, 22b) of the at least two unit panels are being abutted.

## Patentansprüche

1. Windturbinenenergieerzeugungsvorrichtung, die eine Gondel (2) umfasst, welche mehrere Plattenelemente (20a, 20b) und einen Befestigungsbolzen (30) zum Verbinden der mehreren Plattenelemente miteinander umfasst, wobei jedes der mehreren Plattenelemente enthält:
einen Plattenabschnitt (21a, 21b), welcher mindestens einen Teil einer Außenfläche der Gondel bildet,
einen Flanschabschnitt (22a, 22b), der über einen gesamten Umfang einer äußeren Umfangskante des Plattenabschnitts (21a, 21b) angeordnet ist, wobei der Flanschabschnitt ein Bolzenloch (23a, 23b) enthält, durch welches der Befestigungsbolzen (30) zum Verbinden von jedem der mehreren Plattenelemente mit einem benachbarten der mehreren Plattenelemente einzuführen ist, und
einen Dichtungsabschnitt (25a, 25b), der über einen gesamten Umfang an einer äußeren Umfangsfläche des Flanschabschnittes (22a, 22b) angeordnet ist.

2. Windturbinenenergieerzeugungsvorrichtung nach Anspruch 1,
wobei das Bolzenloch (23a, 23b) in jedem der Plattenelemente (20a, 20b) in einem derartigen Bereich des Flanschabschnittes (22a, 22b) gebildet ist, dass der Befestigungsbolzen (30), der in das Bolzenloch (23a, 23b) eingeführt ist, den Dichtungsabschnitt (25a, 25b) nicht durchdringt, und der Dichtungsabschnitt (25a, 25b) in Höhenrichtung der Flanschabschnitte (22a, 22b) zwischen dem Plattenabschnitt (21a, 21b) und dem Bolzenloch (23a, 23b) angeordnet ist.

3. Windturbinenenergieerzeugungsvorrichtung nach Anspruch 1 oder 2,
wobei die Dichtungsabschnitte (25a, 25b) von zwei benachbarten der mehreren Plattenelemente (20a, 20b) in der Höhenrichtung der Flanschabschnitte (22a, 22b) an voneinander unterschiedlichen Positionen angeordnet sind.

4. Windturbinenenergieerzeugungsvorrichtung nach einem der Ansprüche 1 bis 3,
wobei jeder Plattenabschnitt (21a, 21b) ein faserverstärktes Verbundmaterial oder ein Metallmaterial enthält.

5. Windturbinenenergieerzeugungsvorrichtung nach einem der Ansprüche 1 bis 4,
wobei jeder Flanschabschnitt (22a, 22b) eine Nut (35a, 35b) zum Festlegen einer Position des entsprechenden Dichtungsabschnitts (25a, 25b) enthält.

6. Windturbinenenergieerzeugungsvorrichtung nach einem der Ansprüche 1 bis 5, wobei jeder Dichtungsabschnitt (25a, 25b) ein Elastomer enthält.

7. Windturbinenenergieerzeugungsvorrichtung nach einem der Ansprüche 1 bis 6,
wobei jedes der mehreren Plattenelemente (20a, 20b) mindestens eine bogenförmige Ecke enthält, und
wobei die Gondel (2) ferner ein Füllstück (42) zum Füllen einer Lücke (40), die um die mindestens eine Ecke (24) gebildet ist, enthält.

8. Windturbinenenergieerzeugungsvorrichtung nach Anspruch 7,
wobei die Lücke (40) von drei oder mehreren der Plattenelemente (20a, 20b, 20c), die zueinander benachbart angeordnet sind, umgeben ist, eine Grenze, die durch die Ecken von mindestens zwei der drei oder mehreren Plattenelementen definiert ist, aufweist, und mit dem Füllstück (42) ausgefüllt ist.

9. Windturbinenenergieerzeugungsvorrichtung nach Anspruch 7 oder 8,
wobei das Füllstück (42) einen Körper (43), welcher einen Mittelteil des Füllstücks (42) bildet, und einen hervorstehenden Abschnitt (44), welcher so mit dem Körper (43) verbunden ist, dass er eine Ecke des Füllstücks (42) bildet, enthält,
wobei der Körper (43) ein Material enthält, das härter als der Dichtungsabschnitt (25a, 25b) ist und
wobei der hervorstehende Abschnitt (44) ein Elastomer enthält.

10. Windturbinenenergieerzeugungsvorrichtung nach einem der Ansprüche 7 bis 9,
wobei das Füllstück (42) einen Körper (43), der einen Mittelteil des Füllstücks (42) bildet, und einen hervorstehenden Abschnitt (44), der so mit dem Körper (43) verbunden ist, dass er eine Ecke des Füllstücks (42) bildet, enthält,
wobei der hervorstehende Abschnitt (44) ein stabförmiges Dichtungselement (45) enthält, welches sich in der Höhenrichtung des Flanschabschnittes (22a, 22b) erstreckt.

11. Windturbinenenergieerzeugungsvorrichtung nach Anspruch 7 oder 8,
wobei das gesamte Füllstück (42) aus Elastomer hergestellt ist.

12. Windturbinenenergieerzeugungsvorrichtung nach einem der Ansprüche 7 bis 11,
wobei Zwischenräume um das Füllstück (42) in der Lücke (40) mit einer Flüssigdichtung gefüllt sind.

13. Windturbinenenergieerzeugungsvorrichtung nach einem der Ansprüche 1 bis 12,
wobei die mehreren Plattenelemente ein erstes Plattenelement (20a), ein zweites Plattenelement (20b) und ein drittes Plattenelement (20c), welches sowohl mit dem ersten Plattenelement (20a) als auch dem zweiten Plattenelement (20b) verbunden ist, enthalten,
wobei sich in der Höhenrichtung des Flanschabschnittes (22a, 22b, 22c) eine erste Höhe (h₁), in welcher ein Teil des Dichtungsabschnittes (25a) des ersten Plattenelements (20a) das dritte Plattenelement (20c) berührt, von einer zweiten Höhe (h₂), in welcher ein Teil des Dichtungsabschnittes (25b) des zweiten Plattenelements (20b) das dritte Plattenelement (20c) berührt, unterscheidet, und
wobei der Dichtungsabschnitt (25c) des dritten Plattenelements (20c) in der zweiten Höhe (h₂) in einem Bereich angeordnet ist, in dem der Dichtungsabschnitt (25c) der dritten Platte (20c) das erste Plattenelement (20a) berührt, und in der ersten Höhe (h₁) in einem Bereich angeordnet ist, in dem der Dichtungsabschnitt (25c) der dritten Platte (20c) das zweite Plattenelement (20b) berührt, wobei der Dichtungsabschnitt (25c) des dritten Plattenelements (20c) eine Höhe aufweist, die zwischen der ersten Höhe (h₁) und der zweiten Höhe (h₂) schwankt.

14. Windturbinenenergieerzeugungsvorrichtung nach einem der Ansprüche 1 bis 13,
wobei die mehreren Plattenelemente vier der mehreren Plattenelemente (20d, 20e, 20f, 20g) enthalten, welche so verbunden sind, dass die Ecken (24d, 24e, 24f, 24g) der vier Plattenelemente aneinander anliegen, und
wobei die Dichtungsabschnitte (25d, 25e, 25f, 25g) von zwei diagonal verlaufenden der vier Plattenelemente in der Höhenrichtung der Flanschabschnitte (22d, 22e, 22f, 22g) in gleicher Höhe liegen, und die Dichtungsabschnitte (25d, 25e, 25f, 25g) von zwei benachbarten der vier Plattenelemente in unterschiedlichen Höhen liegen.

15. Verfahren zur Montage einer Windturbinenenergieerzeugungsvorrichtung zur Montage einer Gondel (2) durch Verbinden von mehreren Plattenelementen (20a, 20b), von denen jedes enthält: einen Plattenabschnitt (21a, 21b), welcher mindestens einen Teil einer Außenfläche der Gondel bildet, einen Flanschabschnitt (22a, 22b), welcher über einen gesamten Umfang einer äußeren Umfangskante des Plattenabschnitts (21a, 21b) angeordnet ist und welcher ein Bolzenloch (23a, 23b) enthält, und einen Dichtungsabschnitt (25a, 25b), der über einen gesamten Umfang an einer äußeren Umfangsfläche des Flanschabschnitts (22a, 22b) angeordnet ist, wobei das Verfahren **dadurch gekennzeichnet ist, dass** es folgende Schritte umfasst:
Aneinanderlegen der Flanschabschnitte (22a, 22b) von mindestens zwei der mehreren Plattenelemente, sodass die Dichtungsabschnitte (25a, 25b) der mindestens zwei Plattenelemente nicht miteinander überlappen, und
Verbinden der mindestens zwei Plattenelemente (20a, 20b) miteinander durch Einführen eines Befestigungsbolzens (30) in die Bolzenlöcher (23a, 23b) während die Flanschabschnitte (22a, 22b) der mindestens zwei Plattenelemente aneinander anliegen.

## Revendications

1. Appareil de génération d'énergie à éolienne comportant une nacelle (2) qui comprend une pluralité de panneaux unitaires (20a, 20b) et un boulon de fixation (30) pour relier l'un à l'autre les panneaux de la pluralité de panneaux unitaires, chacun de la pluralité de panneaux unitaires comprenant :
une partie de panneau (21a, 21b) qui forme au moins partie d'une surface extérieure de la nacelle ;
une partie de rebord (22a, 22b) disposée sur une périphérie entière d'un bord périphérique extérieur de la partie de panneau (21a, 21b), la partie de rebord comprenant un trou de boulon (23a, 23b) à travers lequel doit être passé le boulon de fixation (30) pour relier chacun de la pluralité de panneaux unitaires à un panneau adjacent de la pluralité de panneaux unitaires ; et
une partie d'étanchéité (25a, 25b) disposée sur une surface périphérique extérieure de la partie de rebord (22a, 22b) sur une périphérie entière.

2. Appareil de génération d'énergie à éolienne selon la revendication 1,
dans lequel, dans chacun de la pluralité de panneaux unitaires (20a, 20b), le trou de boulon (23a, 23b) est formé sur une zone de la partie de rebord (22a, 22b) telle que le boulon de fixation (30) inséré dans le trou de boulon (23a, 23b) ne pénètre pas à travers la partie d'étanchéité (25a, 25b), et la partie d'étanchéité (25a, 25b) est disposée entre la partie de panneau (21a, 21b) et le trou de boulon (23a, 23b) dans une direction de hauteur des parties de rebord (22a, 22b).

3. Appareil de génération d'énergie à éolienne selon la revendication 1 ou 2,
dans lequel les parties d'étanchéité (25a, 25b) de deux panneaux adjacents de la pluralité de panneaux unitaires (20a, 20b) sont disposées dans différentes positions l'une par rapport à l'autre dans la direction de hauteur des parties de rebord (22a, 22b).

4. Appareil de génération d'énergie à éolienne selon l'une quelconque des revendications 1 à 3,
dans lequel chaque partie de panneau (21a, 21b) comprend un matériau composite renforcé de fibres ou un matériau métallique.

5. Appareil de génération d'énergie à éolienne selon l'une quelconque des revendications 1 à 4,
dans lequel chaque partie de rebord (22a, 22b) comprend une rainure (35a, 35b) pour déterminer une position de la partie d'étanchéité correspondante (25a, 25b) .

6. Appareil de génération d'énergie à éolienne selon l'une quelconque des revendications 1 à 5,
dans lequel chaque partie d'étanchéité (25a, 25b) comprend de l'élastomère.

7. Appareil de génération d'énergie à éolienne selon l'une quelconque des revendications 1 à 6,
dans lequel chacun de la pluralité de panneaux unitaires (20a, 20b) comprend au moins un coin d'une forme courbe, et
dans lequel la nacelle (2) comprend en outre une pièce de remplissage (42) pour remplir un espace (40) formé autour du au moins un coin (24).

8. Appareil de génération d'énergie à éolienne selon la revendication 7,
dans lequel l'espace (40) est entouré par trois des panneaux unitaires ou plus (20a, 20b, 20c) disposés de façon adjacente l'un à l'autre, a une limite définie par les coins de au moins deux des trois panneaux unitaires ou plus, et est rempli avec la pièce de remplissage (42).

9. Appareil de génération d'énergie à éolienne selon la revendication 7 ou 8,
dans lequel la pièce de remplissage (42) comprend un corps (43) qui forme une partie centrale de la pièce de remplissage (42), et une partie saillante (44) qui est reliée au corps (43) de façon à former un coin de la pièce de remplissage (42),
dans lequel le corps (43) comprend un matériau plus dur que la partie d'étanchéité (25a, 25b), et dans lequel la partie saillante (44) comprend de l'élastomère.

10. Appareil de génération d'énergie à éolienne selon l'une quelconque des revendications 7 à 9,
dans lequel la pièce de remplissage (42) comprend un corps (43) qui forme une partie centrale de la pièce de remplissage (42), et une partie saillante (44) qui est reliée au corps (43) de façon à former un coin de la pièce de remplissage (42),
dans lequel la partie saillante (44) comprend un élément d'étanchéité en forme de tige (45) qui s'étend dans la direction de hauteur des parties de rebord (22a, 22b).

11. Appareil de génération d'énergie à éolienne selon la revendication 7 ou 8,
dans lequel la pièce de remplissage entière (42) est formée d'élastomère.

12. Appareil de génération d'énergie à éolienne selon l'une quelconque des revendications 7 à 11,
dans lequel un jeu autour de la pièce de remplissage (42) dans l'espace (40) est rempli avec un joint liquide.

13. Appareil de génération d'énergie à éolienne selon l'une quelconque des revendications 1 à 12,
dans lequel la pluralité de panneaux unitaires comprend un premier panneau unitaire (20a), un deuxième panneau unitaire (20b), et un troisième panneau unitaire (20c) qui est relié à chacun du premier panneau unitaire (20a) et du deuxième panneau unitaire (20b),
dans lequel, dans la direction de hauteur des parties de rebord (22a, 22b, 22c), une première hauteur (h₁) à laquelle une partie de la partie d'étanchéité (25a) du premier panneau unitaire (20a) contacte le troisième panneau unitaire (20c) est différente d'une deuxième hauteur (h₂) à laquelle une partie de la partie d'étanchéité (25b) du deuxième panneau unitaire (20b) contacte le troisième panneau unitaire (20c), et
dans lequel la partie d'étanchéité (25c) du troisième panneau unitaire (20c) est disposée à la deuxième hauteur (h₂) dans une zone où la partie d'étanchéité (25c) du troisième panneau (20c) contacte le premier panneau unitaire (20a), et est disposée à la première hauteur (h₁) dans une zone où la partie d'étanchéité (25c) du troisième panneau (20c) contacte le deuxième panneau unitaire (20b), la partie d'étanchéité (25c) du troisième panneau unitaire (20c) ayant une hauteur qui varie entre la première hauteur (h₁) et la deuxième hauteur (h₂) .

14. Appareil de génération d'énergie à éolienne selon l'une quelconque des revendications 1 à 13,
dans lequel la pluralité de panneaux unitaires comprend quatre panneaux de la pluralité de panneaux unitaires (20d, 20e, 20f, 20g) qui sont reliés de telle sorte que les coins (24d, 24e, 24f, 24g) des quatre panneaux unitaire sont en butée l'un avec l'autre, et
dans lequel, dans la direction de hauteur des parties de rebord (22d, 22e, 22f, 22g), les parties d'étanchéité (25d, 25e, 25f, 25g) de deux panneaux en diagonale des quatre panneaux unitaires sont à une hauteur identique, et les parties d'étanchéité (25d, 25e, 25f, 25g) de deux panneaux adjacents des quatre panneaux unitaires sont à des hauteurs différentes.

15. Procédé d'assemblage d'un appareil de génération d'énergie à éolienne, pour l'assemblage d'une nacelle (2) en reliant une pluralité de panneaux unitaires (20a, 20b) dont chacun comprend : une partie de panneau (21a, 21b) qui forme au moins partie d'une surface extérieure de la nacelle ; une partie de rebord (22a, 22b) qui est disposée sur une périphérie entière d'un bord périphérique extérieur de la partie de panneau (21a, 21b) et qui comprend un trou de boulon (23a, 23b) ; et une partie d'étanchéité (25a, 25b) disposée sur une périphérie entière sur une surface périphérique extérieure de la partie de rebord (22a, 22b), le procédé étant **caractérisé en ce qu'**il comporte les étapes de :
mettre en butée des parties de rebord (22a, 22b) d'au moins deux panneaux de la pluralité de panneaux unitaires de telle sorte que les parties d'étanchéité (25a, 25b) des au moins deux panneaux unitaires ne se chevauchent pas l'une l'autre ; et
raccorder les au moins deux panneaux unitaires (20a, 20b) l'un à l'autre en insérant un boulon de fixation (30) dans les trous de boulon (23a, 23b) alors que les parties de rebord (22a, 22b) des au moins deux panneaux unitaires sont en butée.
